# EUROPEAN PATENT APPLICATION

(11) **EP 1 457 168 A1**
(43) Date of publication of application: **15.09.2004**
(21) Application number: 04005964.4
(22) Date of filing: 12.03.2004
(51) Int. Cl.: A61C 13/235

(54) **Dental magnetic attachment and process for producing the same**

(30) Priority: 14.03.2003 JP 2003069053; 22.12.2003 JP 2003424948
(71) Applicant: GC Corporation, Itabashi-ku, Tokyo (JP)
(72) Inventor: Yamaguchi, Kaoru c/o GC Corporation, Tokyo (JP); Sekiguchi, Toshihiro c/o GC Corporation, Tokyo (JP)
(74) Representative: Müller-Boré & Partner Patentanwälte

(57) **Abstract**

To provide an effective dental magnetic attachment for fixing a denture to an anchor tooth for both a molar and an anterior tooth, the dental magnetic attachment comprises a keeper having an adsorbing surface forming an externally convex curved line in a major axis and an externally convex curved line or a straight line in a minor axis continued to the externally convex curved line in the major axis and having a ratio of a major axis diameter to a minor axis diameter of 1.02 to 2.0, and a magnet structure comprising a cup yoke formed with a soft magnetic material and a cylindrical permanent magnet embedded in a circular depressed part provided in a central part of the cup yoke, with the depressed part being sealed by welding with a soft magnetic disk plate through a non-magnetic ring seal to form a plane adsorbing surface having the substantially same shape as the adsorbing surface of the keeper, with a minor axis diameter of the adsorbing surface of the magnet structure of 1.1 to 1.4 with respect to the diameter of the cylindrical permanent magnet being 1.

## Description

### BACKGROUND OF THE INVENTION

### FIELD OF THE INVENTION

The present invention relates to a dental magnetic attachment comprising a set of a magnet structure for the dental magnetic attachment, which is to be fixed on an alveolar ridge side of a denture base, and a keeper for the dental magnetic attachment, which is to be fixed to an anchor tooth on an alveolar ridge in an oral cavity of a patient, for fixing a denture to an anchor tooth, particularly preferably an anterior tooth, on an alveolar ridge in an oral cavity of a patient by a magnetic attractive force, and a process for producing the same.

### DESCRIPTION OF THE CONVENTIONAL ART

As a method for fixing a partial denture or a full denture to an oral cavity, such a method is being widely employed that uses a dental magnetic attachment comprising a magnetic structure having a covered permanent magnet fixed to an alveolar ridge side of the denture and a keeper formed with a soft magnetic material fixed to an anchor tooth on an alveolar ridge in an oral cavity of a patient, whereby the denture is fixed by using a magnetic attractive force effected between the magnetic structure and the keeper. This is because of various excellent characteristics, for example, the attachment does not have a part to be worn or broken as in a mechanical retainer, such as clasp, to prevent the retaining force from being decayed during a long term use, the direction of the detaching force may be inexact, whereby the denture can be easily designed and produced, and the denture can be easily attached and detached in an oral cavity, the attachment is excellent in estheticity without an exposed part as in a clasp, and the attachment can be easily cleaned.

In the dental magnetic attachment comprising a magnetic structure and a keeper, the following magnetic structures are mainly employed. A magnetic structure referred to as a sandwich type having a rectangular shape is disclosed, for example, in JP-B-7-32784, which comprises a pair of yokes formed with an anticorrosive soft magnetic alloy set up toward a root plate, a spacer formed with an anticorrosive non-magnetic alloy provided on the side of the root plate between the pair of yokes, a magnet body disposed on the side of the spacer opposite to the root plate with an S pole and an N pole thereof facing the both of yokes respectively, and a case formed with an anticorrosive non-magnetic alloy covering the pair of yokes and the spacer except for the side facing the root plate. A magnetic structure referred to as a cap yoke type having a disk shape is disclosed, for example, in Japanese Patent No. 2, 795, 755, which comprises a yoke having a cup shape formed with a magnetic material having on one surface thereof a circular depressed part with the center agreeing with the central axis of the disk, and a permanent magnet having the same shape as the depressed part embedded therein, in which the depressed part is sealed by welding with a circular disk plate formed with a magnetic material through a non-magnetic ring member.

The plane shape of the two kinds of a magnetic attachment comprising a magnetic structure and a keeper is a rectangular shape for the sandwich type magnetic structure or a disk shape for the cup yoke type magnetic structure due to advantages on configuration of the components and magnetic circuits.
In clinical applications, the retainer is generally designed and produced under consideration of a form of a denture and a form of a tooth, but the shape of the commercially available dental magnetic attachment at present is limited to the rectangular shape and the disk shape due to the structure of the magnetic structure. A form of a denture and a tooth cross sectional shape in the vicinity of gingiva of an anchor tooth, to which the keeper is to be fixed, vary depending on regions, and in particular, the tooth cross sectional shape in the vicinity of gingiva of an anchor tooth, to which the keeper is to be fixed, generally largely varies between the an anterior tooth and a molar tooth. Therefore, the rectangular keeper is suitable for the anterior tooth part, which has an elongated elliptic tooth cross sectional shape, but the disk shape keeper is suitable for the molar tooth part, which has a nearly circular tooth cross sectional shape. However, in the case where the two kinds of keepers are selectively used, it is necessary that the sandwich type magnetic structure having a rectangular shape is used for the anterior tooth part, and the cup yoke type magnetic structure having a disk shape is used for the molar tooth part, depending on the shapes of the keepers. There are differences between the two kinds of magnetic structure in basic structures and retaining mechanisms on the denture side, and accordingly, the production process of dentures is complicated due to lack of uniformity in production of dentures.

It is advantageous in the case where either of the rectangular sandwich type magnet structure and the disk shape cup yoke type magnet structure can be used irrespective to the tooth cross sectional shape. For example, the rectangular keeper and the sandwich type magnet structure suitable for the anterior tooth part can be used for the molar tooth part having a nearly circular tooth cross sectional shape. However, there is such a problem in that the sandwich type magnet structure cannot be used in the case where the thickness of the denture base, to which the magnetic structure is to be fixed, is too short, due to the larger thickness thereof than that of the cup yoke type magnet structure.

Furthermore, in the case where the disk shape keeper and the cup yoke type magnet structure suitable for the molar tooth part is used in the anterior tooth part, only a disk shape keeper having a smaller size can be used because the tooth cross sectional shape in the anterior tooth part is an elongated elliptic shape, and therefore, a denture cannot be firmly fixed. In the case where a larger disk shape keeper is forcedly applied, it becomes difficult to fix the keeper to the tooth, and it is necessary that the tooth is excessively ground to cause such a problem in that a patient, who hopes to suppress the ground amount of the tooth as less as possible, suffers devastating agonies.

Under the circumstances, it is demanded to provide such a dental magnetic attachment that has varied shapes suitable for both of the tooth cross sectional shape, to which the rectangular keeper is preferably used, and the tooth cross sectional shape, to which the disk shape keeper is preferably used.

### SUMMARY OF THE INVENTION

An object of the present invention is to provide such a dental magnetic attachment comprising a set of a magnetic structure for the dental magnetic attachment, which is to be fixed on an alveolar ridge side of a denture base, and a keeper for the dental magnetic attachment, which is to be fixed to an anchor tooth on an alveolar ridge in an oral cavity of a patient, that satisfies the aforementioned requirements and is effective for a tooth having a nearly elliptic cross sectional shape, such as an anterior tooth, in the vicinity of gingiva of an anchor tooth, to which the keeper is to be fixed, and a process for producing the same.

As a result of the earnest investigations attained by the inventors for solving the problems, it has been found the following.

It is necessary that the magnetic structure for a dental magnetic attachment has a sufficient strength since it suffers forces from various directions due to the function thereof in an oral cavity. In this standpoint, the cup yoke type magnet structure is advantageous against distortion of the magnet structure and local deformation at a part in contact with the keeper, owing to the high strength thereof in comparison to the sandwich type magnet structure, and the height of the cup yoke type magnet structure can be made low in comparison to that of the sandwich type, whereby the cup yoke type magnet structure can be widely applied. Therefore, it is advantageous in production of dentures in the case where the cup yoke type magnet structure can be used not only in the molar tooth part but also in the anterior tooth part owing to uniformity in production of dentures.

The cup yoke type magnet structure generally has a circular disk shape, and a keeper having the same circular disk shape as the magnet structure is used to prevent magnetic flux from being leaked from the magnet structure. The inventors have investigated how to fix the circular keeper to a tooth having an elliptic cross sectional shape, such as an anterior tooth, in the vicinity of gingiva of an anchor tooth. As a result, it has been found that in the case where a keeper having an adsorbing surface forming an externally convex curved line in a major axis and an externally convex curved line or a straight line in a minor axis continued to the externally convex curved line in the major axis and having a ratio of a major axis diameter and a minor axis diameter (major axis diameter/minor axis diameter) of 1.02 to 2.0, and a magnet structure comprising a cup yoke formed with a soft magnetic material and a cylindrical permanent magnet embedded in a circular depressed part provided in a central part of the cup yoke, with the depressed part of the cup yoke being sealed by welding with a circular disk plate formed with a soft magnetic material through a non-magnetic ring seal to form a plane adsorbing surface having the substantially same shape as the adsorbing surface of the keeper, are combined, the keeper has an adsorbing surface having the similar shape as a tooth cross sectional shape of an anterior tooth to facilitate fixation thereof to the anterior tooth part, and the shape of the adsorbing surface of the cup yoke type magnet structure, which is generally a circular shape, can be accommodated to the adsorbing surface of the keeper, whereby the cup yoke type magnet structure can be used in the anterior tooth part. Accordingly, the cup yoke type dental magnetic attachment can be used not only in the molar tooth part but also in the anterior tooth part to attain uniformity in production of dentures.

Even in the case where the shape of the adsorbing surface of the keeper and the shape of the adsorbing surface of the magnet structure are simply accommodated to the tooth cross sectional shape of the anterior tooth part, the path, through which magnetic flux emitted from the cylindrical permanent magnet in the magnet structure runs, is partially narrowed to fail to obtain a sufficient magnetic force. However, it has been found that the path for the magnetic flux can be sufficiently ensured in the case where the short axis diameter of the adsorbing surface of the magnet structure is 1.1 to 1.4 with respect to the diameter of the cylindrical permanent magnet being 1.

Accordingly, the dental magnetic attachment according to the present invention has been completed.

It has been found that in the case where a magnet structure is produced by a process comprising steps of: embedding a cylindrical permanent magnet in a circular depressed part of a cup yoke formed with a soft magnetic material having a shape having the circular depressed part at a central part thereof and an outer shape of a surface having the depressed part forming an externally convex curved line in a major axis and an externally convex curved line or a straight line in a minor axis continued to the externally convex curved line in the major axis with a minor axis diameter of 1.1 to 1.4 with respect to a diameter of the cylindrical permanent magnet being 1, and a ratio of a major axis diameter and the minor axis diameter (major axis diameter/minor axis diameter) of 1.02 to 2.0; and sealing the depressed part of the cup yoke by welding with a circular disk plate formed with a soft magnetic material through a non-magnetic ring seal to form a plane adsorbing surface, the magnet structure according to the present invention suitable for the anterior tooth part can be easily produced by using a cup yoke having an adsorbing surface accommodated to the tooth cross sectional shape in the anterior tooth part in the manner similar to the conventional technique to produce a magnet structure.

It has also been found that in the case where a magnet structure is produced by a process comprising steps of: embedding a cylindrical permanent magnet in a circular depressed part of a cup yoke formed with a soft magnetic material having a circular transversal cross sectional shape and having the circular depressed part at a central part thereof; sealing the depressed part of the cup yoke by welding with a circular disk plate formed with a soft magnetic material through a non-magnetic ring seal to form a plane surface, so as to produce a magnet structure having a circular transversal cross sectional shape, which is similar to that of the conventional technique; and ablating side parts of the cup yoke opposite to each other to a plane shape, so as to make a minor axis diameter of 1.1 to 1.4 with respect to a diameter of the cylindrical permanent magnet being 1, and a ratio of a major axis diameter and the minor axis diameter (major axis diameter/minor axis diameter) of 1.02 to 2.0, a magnet structure according to the present invention can be easily produced only by ablating the side parts of the cup yoke opposite to each other after producing a circular magnet structure similar to that of the conventional technique.

It has further been found that in the case where a keeper is produced by a process comprising a step of ablating opposite side parts of a disk shape keeper formed with a soft magnetic material to a plane shape to form an adsorbing surface having a ratio of a major axis diameter and the minor axis diameter (major axis diameter/minor axis diameter) of 1.02 to 2.0, a keeper according to the present invention can be easily produced only by ablating opposite side parts of a disk shape keeper according to the conventional technique to a plane shape.

It has still further been found that in the case where a dental magnetic attachment is produced by a process comprising steps of: preparing a keeper having an adsorbing surface having a circular plane shape formed with a soft magnetic material, and a magnetic structure comprising a cup yoke formed with a soft magnetic material having a circular depressed part at a central part thereof and an outer shape of a surface having the depressed part in the same shape as the adsorbing surface of the keeper, and a cylindrical permanent magnet embedded in the depressed part with the depressed part being sealed by welding with a circular disk plate formed with a soft magnetic material through a non-magnetic ring seal to form a plane adsorbing surface; and ablating simultaneously opposite side parts of the magnet structure and those of the keeper in a state where the adsorbing surface of the magnet structure and the adsorbing surface of the keeper are attached to each other through magnetism, so as to obtain a keeper having an adsorbing surface having a ratio of a major axis diameter and the minor axis diameter (major axis diameter/minor axis diameter) of 1.02 to 2.0, and a magnet structure having an adsorbing surface having the same shape as the adsorbing surface of the keeper and a minor axis diameter of 1.1 to 1.4 with respect to a diameter of the cylindrical permanent magnet being 1, a keeper and a magnet structure according to the present invention can be easily produced simultaneously.

Thus, the process for producing a dental magnetic attachment according to the present invention has been completed.

Accordingly, the invention relates to:
a dental magnetic attachment comprising a keeper having an adsorbing surface forming an externally convex curved line in a major axis and an externally convex curved line or a straight line in a minor axis continued to the externally convex curved line in the major axis and having a ratio of a major axis diameter and a minor axis diameter (major axis diameter/minor axis diameter) of 1.02 to 2.0, and a magnet structure comprising a cup yoke formed with a soft magnetic material and a cylindrical permanent magnet embedded in a circular depressed part provided in a central part of the cup yoke, with the depressed part of the cup yoke being sealed by welding with a circular disk plate formed with a minor magnetic material through a non-magnetic ring seal to form a plane adsorbing surface having the substantially same shape as the adsorbing surface of the keeper, with a minor axis diameter of the adsorbing surface of the magnet structure of 1.1 to 1.4 with respect to the diameter of the cylindrical permanent magnet being 1,
a process for producing a magnet structure comprising steps of: embedding a cylindrical permanent magnet in a circular depressed part of a cup yoke formed with a soft magnetic material having a shape having the circular depressed part at a central part thereof and an outer shape of a surface having the depressed part forming an externally convex curved line in a major axis and an externally convex curved line or a straight line in a minor axis continued to the externally convex curved line in the major axis with a minor axis diameter of 1.1 to 1.4 with respect to a diameter of the cylindrical permanent magnet being 1, and a ratio of a major axis diameter and the minor axis diameter (major axis diameter/minor axis diameter) of 1.02 to 2.0; and sealing the depressed part of the cup yoke by welding with a circular disk plate formed with a soft magnetic material through a non-magnetic ring seal to form a plane adsorbing surface,
a process for producing a magnet structure comprising steps of: embedding a cylindrical permanent magnet in a circular depressed part of a cup yoke formed with a soft magnetic material having a circular transversal cross sectional shape and having the circular depressed part at a central part thereof; sealing the depressed part of the cup yoke by welding with a circular disk plate formed with a soft magnetic material through a non-magnetic ring seal to form a plane surface, so as to produce a magnet structure having a circular transversal cross sectional shape; and ablating side parts of the cup yoke opposite to each other to a plane shape, so as to make a minor axis diameter of 1.1 to 1.4 with respect to a diameter of the cylindrical permanent magnet being 1, and a ratio of a major axis diameter and the minor axis diameter (major axis diameter/minor axis diameter) of 1.02 to 2.0,
a process for producing a keeper comprising a step of ablating opposite side parts of a disk shape keeper formed with a soft magnetic material to a plane shape to form an adsorbing surface having a ratio of a major axis diameter and the minor axis diameter (major axis diameter/minor axis diameter) of 1.02 to 2.0, and
a process for producing a dental magnetic attachment comprising steps of: preparing a keeper having an adsorbing surface having a circular plane shape formed with a soft magnetic material, and a magnet structure comprising a cup yoke formed with a soft magnetic material having a circular depressed part at a central part thereof and an outer shape of a surface having the depressed part in the same shape as the adsorbing surface of the keeper, and a cylindrical permanent magnet embedded in the depressed part with the depressed part being sealed by welding with a circular disk plate formed with a soft magnetic material through a non-magnetic ring seal to form a plane adsorbing surface; and ablating simultaneously opposite side parts of the magnet structure and those of the keeper in a state where the adsorbing surface of the magnet structure and the adsorbing surface of the keeper are attached to each other through magnetism, so as to obtain a keeper having an adsorbing surface having a ratio of a major axis diameter and the minor axis diameter (major axis diameter/minor axis diameter) of 1.02 to 2.0, and a magnet structure having an adsorbing surface having the same shape as the adsorbing surface of the keeper and a minor axis diameter of 1.1 to 1.4 with respect to a diameter of the cylindrical permanent magnet being 1.

The following embodiments are preferred in the dental magnetic attachment according to the present invention. In the case where the adsorbing surface of the keeper has a shape forming the externally convex curved line in the major axis, which is a circular arc having a constant radius with the same center as the center of the major axis, and a straight line in a minor axis continued to the circular arc in the major axis, it is preferred since the keeper can be easily processed. In the case where the adsorbing surface of the keeper has an elliptic shape, it is preferred since the shape of the adsorbing surface of the keeper can be further accommodated to the tooth cross sectional shape in the anterior tooth part. In the case where the adsorbing surface of the magnet structure has a shape forming straight lines in parallel to each other in the minor axis, and plane side surfaces opposite to each other are provided on both sides of the cup yoke as being continued from the straight lines in the minor axis, and further in the case where the plane side surfaces opposite to each other are substantially in parallel to each other, it is preferred since the cup yoke can be easily produced. In the case where a ratio of an area (Sa) occupied by the cup yoke on the adsorbing surface of the magnet structure and a transversal cross sectional area (Sm) of the cylindrical permanent magnet (Sa/Sm) is 0.8 to 1.5, it is preferred since the path, through which the magnetic flux runs, can be further ensured. In the case where a prehension bar is provided on a side part of the keeper, it is preferred since the workability upon attaching the keeper to an anchor tooth is improved. In the case where a column is provided on a surface of the keeper opposite to the adsorbing surface, it is preferred since the keeper can be firmly attached to an anchor tooth.

The dental magnetic attachment according to the present invention is constituted from a keeper having an adsorbing surface forming an externally convex curved line in a major axis and an externally convex curved line or a straight line in a minor axis continued to the externally convex curved line in the major axis and having a ratio of a major axis diameter and a minor axis diameter (major axis diameter/minor axis diameter) of 1.02 to 2.0, and a magnet structure comprising a cup yoke formed with a soft magnetic material and a cylindrical permanent magnet embedded in a circular depressed part provided in a central part of the cup yoke, with the depressed part of the cup yoke being sealed by welding with a circular disk plate formed with a soft magnetic material through a non-magnetic ring seal to form a plane adsorbing surface having the substantially same shape as the adsorbing surface of the keeper. Therefore, the adsorbing surface of the keeper has such a shape that is accommodated to the tooth cross sectional shape in the anterior tooth part to facilitate fixation thereof to an anchor tooth in the anterior tooth part, and the shape of the adsorbing surface of the cup yoke type magnet structure, which is generally a circular shape, can be accommodated to the shape of the adsorbing surface of the keeper, whereby the cup yoke type magnet structure can be applied to the anterior tooth part. Even in the case where the shape of the adsorbing surface of the keeper and the shape of the adsorbing surface of the magnet structure are simply accommodated to the tooth cross sectional shape of the anterior tooth part, the path, through which magnetic flux emitted from the cylindrical permanent magnet in the magnet structure runs, is partially narrowed to fail to obtain a sufficient magnetic force. However, the short axis diameter of the adsorbing surface of the magnet structure is 1.1 to 1.4 with respect to the diameter of the cylindrical permanent magnet being 1, and therefore, the path for the magnetic flux can be ensured to obtain a sufficient magnetic force by defining the shape of the adsorbing surface of the cup yoke type magnet structure with respect to the diameter of the cylindrical permanent magnet.

In the dental magnetic attachment, the keeper can be easily processed in the case where the adsorbing surface of the keeper has a shape forming the externally convex curved line in the maj or axis, which is a circular arc having a constant radius with the same center as the center of the major axis, and a straight line in a minor axis continued to the circular arc in the major axis; the shape of the adsorbing surface of the keeper can be further accommodated to the tooth cross sectional shape in the anterior tooth part in the case where the adsorbing surface of the keeper has an elliptic shape; the cup yoke can be easily produced in the case where the adsorbing surface of the magnet structure has a shape forming straight lines in parallel to each other in the minor axis, and plane side surfaces opposite to each other are provided on both sides of the cup yoke as being continued from the straight lines in the minor axis, and further in the case where the plane side surfaces opposite to each other are substantially in parallel to each other; the path, through which the magnetic flux runs, can be further ensured in the case where a ratio of an area (Sa) occupied by the cup yoke on the adsorbing surface of the magnet structure and a transversal cross sectional area (Sm) of the cylindrical permanent magnet (Sa/Sm) is 0.8 to 1.5; the workability upon attaching the keeper to an anchor tooth is improved in the case where a prehension bar is provided on a side part of the keeper; and the keeper can be firmly attached to an anchor tooth in the case where a column is provided on a surface of the keeper opposite to the adsorbing surface.

In the process for producing a dental magnetic attachment according to the present invention, the process for producing a magnet structure comprises steps of: embedding a cylindrical permanent magnet in a circular depressed part of a cup yoke formed with a soft magnetic material having a shape having the circular depressed part at a central part thereof and an outer shape of a surface having the depressed part forming an externally convex curved line in a major axis and an externally convex curved line or a straight line in a minor axis continued to the externally convex curved line in the major axis with a minor axis diameter of 1.1 to 1.4 with respect to a diameter of the cylindrical permanent magnet being 1, and a ratio of a major axis diameter and the minor axis diameter (major axis diameter/minor axis diameter) of 1.02 to 2.0; and sealing the depressed part of the cup yoke by welding with a circular disk plate formed with a soft magnetic material through a non-magnetic ring seal to form a plane adsorbing surface. Therefore, the magnet structure according to the present invention suitable for the anterior tooth part can be easily produced in the manner similar to the conventional technique by using the cup yoke having the shape of the adsorbing surface accommodated to the tooth cross sectional shape in the anterior tooth part.

In the process for producing a dental magnetic attachment according to the present invention, the process for producing a magnet structure comprises steps of: embedding a cylindrical permanent magnet in a circular depressed part of a cup yoke formed with a soft magnetic material having a circular transversal cross sectional shape and having the circular depressed part at a central part thereof; sealing the depressed part of the cup yoke by welding with a circular disk plate formed with a soft magnetic material through a non-magnetic ring seal to form a plane surface, so as to produce a magnet structure having a circular transversal cross sectional shape; and ablating side parts of the cup yoke opposite to each other to a plane shape, so as to make a minor axis diameter of 1.1 to 1.4 with respect to a diameter of the cylindrical permanent magnet being 1, and a ratio of a major axis diameter and the minor axis diameter (major axis diameter/minor axis diameter) of 1.02 to 2.0. Therefore, the magnet structure according to the present invention can be produced only by ablating the side parts of the cup yoke opposite to each other after producing a circular magnet structure similar to that of the conventional technique.

In the process for producing a dental magnetic attachment according to the present invention, the process for producing a keeper comprises a step of ablating opposite side parts of a disk shape keeper formed with a soft magnetic material to a plane shape to form an adsorbing surface having a ratio of a major axis diameter and the minor axis diameter (major axis diameter/minor axis diameter) of 1.02 to 2.0. Therefore, the keeper according to the present invention can be produced only by ablating the side parts opposite to each other of a disk shape keeper similar to that of the conventional technique.

The process for producing a dental magnetic attachment according to the present invention comprises steps of: preparing a keeper having an adsorbing surface having a circular plane shape formed with a soft magnetic material, and a magnet structure comprising a cup yoke formed with a soft magnetic material having a circular depressed part at a central part thereof and an outer shape of a surface having the depressed part in the same shape as the adsorbing surface of the keeper, and a cylindrical permanent magnet embedded in the depressed part with the depressed part being sealed by welding with a circular disk plate formed with a soft magnetic material through a non-magnetic ring seal to form a plane adsorbing surface; and ablating simultaneously opposite side parts of the magnet structure and those of the keeper in a state where the adsorbing surface of the magnet structure and the adsorbing surface of the keeper are attached to each other through magnetism, so as to obtain a keeper having an adsorbing surface having a ratio of a major axis diameter and the minor axis diameter (major axis diameter/minor axis diameter) of 1.02 to 2.0, and a magnet structure having an adsorbing surface having the same shape as the adsorbing surface of the keeper and a minor axis diameter of 1.1 to 1.4 with respect to a diameter of the cylindrical permanent magnet being 1. Therefore, the keeper and the magnet structure according to the present invention can be easily produced simultaneously.

### BRIEF DESCRIPTION OF THE DRAWINGS

Fig. 1 is a perspective view showing one embodiment of a keeper and a magnet structure of a dental magnetic attachment according to the present invention.
Fig. 2 is a cross sectional view showing the magnet structure shown in Fig. 1.
Fig. 3 is a perspective view showing another embodiment of a keeper and a magnet structure of a dental magnetic attachment according to the present invention.
Fig. 4 is a perspective view showing still another embodiment of a keeper and a magnet structure of a dental magnetic attachment according to the present invention.
Fig. 5 is a perspective view showing a further embodiment of a keeper and a magnet structure of a dental magnetic attachment according to the present invention.
Fig. 6 is an elevational view showing the magnet structure shown in Fig. 5.

### DESCRIPTION OF THE PREFERRED EMBODIMENTS

The dental magnetic attachment and the process for producing the same according to the present invention will be described in more detail below with reference to the figures.

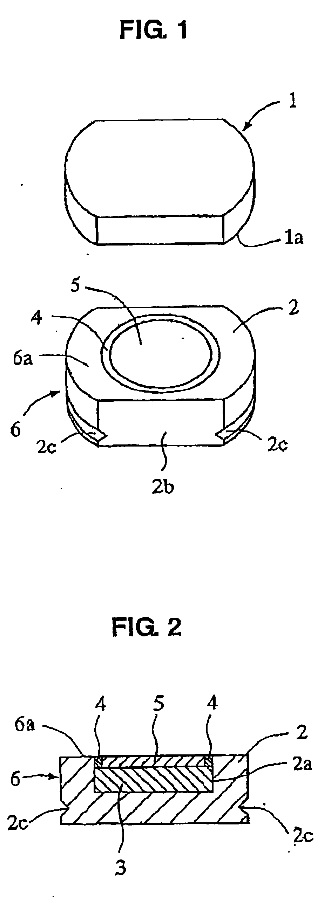

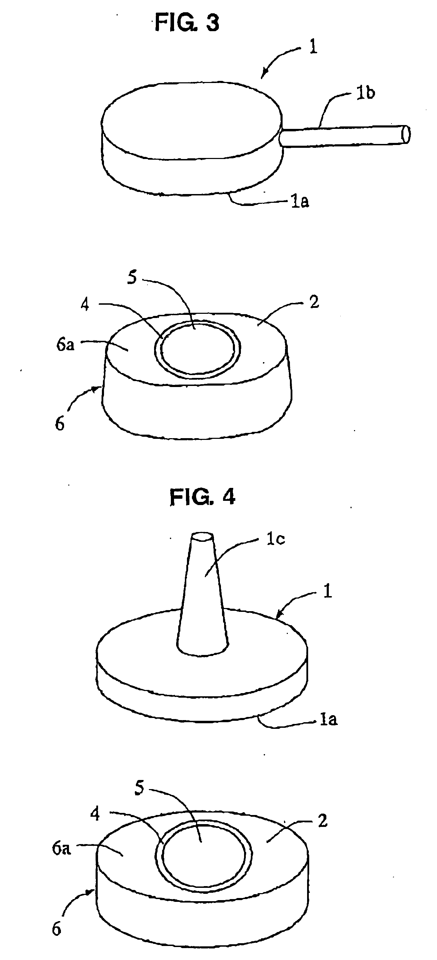

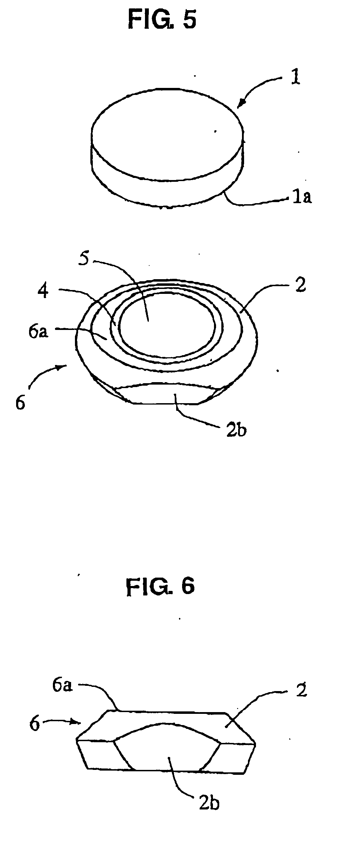

Fig. 1 is a perspective view showing one embodiment of a keeper and a magnet structure of a dental magnetic attachment according to the present invention, Fig. 2 is a cross sectional view showing the magnet structure shown in Fig. 1, Fig. 3 is a perspective view showing another embodiment of a keeper and a magnet structure of a dental magnetic attachment according to the present invention, Fig. 4 is a perspective view showing still another embodiment of a keeper and a magnet structure of a dental magnetic attachment according to the present invention, Fig. 5 is aperspectiveview showing a further embodiment of a keeper and a magnet structure of a dental magnetic attachment according to the present invention, and Fig. 6 is an elevational view showing the magnet structure shown in Fig. 5.

In the figures, numeral 1 denotes a keeper formed with a soft magnetic material excellent in corrosion resistance, such as 26Cr-1Mo stainless steel, having an adsorbing surface 1a forming an externally convex curved line in a major axis and an externally convex curved line or a straight line in a minor axis continued to the externally convex curved line in the major axis and having a ratio of a major axis diameter and a minor axis diameter (major axis diameter/minor axis diameter) of 1.02 to 2.0, and the adsorbing surface 1a has such a shape that is accommodated to the tooth cross sectional shape in the anterior tooth part. In the case where the adsorbing surface 1a of the keeper 1 has a shape forming the externally convex curved line in the major axis, which is a circular arc having a constant radius with the same center as the center of the major axis, and a straight line in a minor axis continued to the circular arc in the major axis as shown in Fig. 1, it is preferred since the keeper can be easily processed. In the case where the adsorbing surface 1a of the keeper 1 has an elliptic shape as shown in Fig. 4, it is preferred since the shape of the adsorbing surface 1a of the keeper 1 can be further accommodated to the tooth cross sectional shape in the anterior tooth part. In the case where a prehension bar 1b is provided on a side part of the keeper 1 as shown in Fig. 3, it is preferred since the workability upon attaching the keeper to an anchor tooth is improved. In the case where a column 1c is provided on a surface of the keeper 1 opposite to the adsorbing surface 1a, it is preferred since the keeper 1 can be firmly attached to an anchor tooth.

The numeral 2 denotes a cup yoke formed with a soft magnetic material excellent in corrosion resistance, such as 26Cr-1Mo stainless steel, and the outer shape of the surface thereof having a depressed part 2a formed thereon is substantially the same as the outer shape of the adsorbing surface 1a of the keeper 1. In the case where the outer shape of the surface having a depressed part 2a formed thereon is a shape forming straight lines in parallel to each other in the minor axis, and plane side surfaces 2b opposite to each other are provided on both sides of the cup yoke 2 as being continued from the straight lines in the minor axis, and further in the case where the plane side surfaces 2b opposite to each other of the cup yoke 2 are substantially in parallel to each other, it is preferred since the cup yoke 2 can be easily produced. Furthermore, in the case where protrusions or grooves along the transversal cross sectional surface of the cup yoke 2 are provided on at least a part of the side parts of the cup yoke 2, or in the case where the surface of at least one of the side parts of the cup yoke 2 and the surface of the cup yoke 2 opposite to the surface having the depressed part 2a formed thereon are roughened, it is preferred since the adhesion to a resin constituting a denture base is improved upon applying the cup yoke 2 to a magnet structure 6 described later.

The numeral 3 denotes a cylindrical permanent magnet, such as an Nd-Fe-B series magnet, embedded in the circular depressed part 2a provided in the central part of the cup yoke 2. The cylindrical permanent magnet 3 preferably has the same shape as the circular depressed part 2a. The minor axis diameter of the adsorbing surface 1a of the keeper 1 is 1.1 to 1.4 with respect to the diameter of the cylindrical permanent magnet 3 being 1.

The numeral 4 denotes a non-magnetic ring seal. The non-magnetic ring seal is preferably an Ni free high nitrogen content stainless steel containing substantially no nickel, such as austenite stainless steel used as a spacer of a magnetic attachment for a denture described in JP-A-2000-252289, whereby the risk of causing allergy can be reduced.

The numeral 5 denotes a circular disk plate formed with the substantially same soft magnetic material as the cup yoke 2 for sealing by welding the depressed part 2a of the cup yoke 2, in which the cylindrical permanent magnet 3 is embedded, through the non-magnetic ring seal 4, and fulfills such a role that a magnetic attractive force of the cylindrical permanent magnet 3 is efficiently effected to the keeper 1.

The numeral 6 denotes a magnet structure having the cup yoke 2 formed with a soft magnetic material and the cylindrical permanent magnet 3 embedded in the circular depressed part 2a provided in the central part of the cup yoke 2, with the depressed part 2a of the cup yoke 2 being sealed by welding with the circular disk plate 5 formed with a soft magnetic material through the non-magnetic ring seal 4 to form a plane adsorbing surface 6a having the substantially same shape as the adsorbing surface 1a of the keeper 1. The adsorbing surface 6a of the magnet structure 6 has a minor axis diameter of 1.1 to 1.4 with respect to the diameter of the cylindrical permanent magnet 3 being 1, and therefore, the path for the magnetic flux emitted from the cylindrical permanent magnet 3 can be ensured to obtain a sufficient magnetic force. In the case where a ratio of an area (Sa) occupied by the cup yoke 2 on the adsorbing surface 6a of the magnet structure 6 and a transversal cross sectional area (Sm) of the cylindrical permanent magnet 3 (Sa/Sm) is 0.8 to 1.5, it is preferred since the path, through which the magnetic flux runs, can be further ensured. In the case where the shape of the adsorbing surface 6a of the magnet structure 6 and the cross sectional shape of the magnet structure 6 in parallel to the adsorbing surface 6a are substantially similar to or substantially the same as each other, it is preferred since the magnet structure 6 can be easily produced owing to the relatively simple entire shape thereof. In the case where the transversal cross sectional area of the magnet structure 6 in parallel to the adsorbing surface 6a is increased away from the adsorbing surface 6a as shown in Fig. 3, or in the case where the transversal cross sectional area of the magnet structure 6 in parallel to the adsorbing surface 6a is increased away from the adsorbing surface 6a up to a certain position and is then decreased upon approaching the opposite surface as shown in Figs. 5 and 6, it is preferred since the adhesion to a resin constituting a denture base can be improved.

The process for producing a dental magnetic attachment according to the invention will be described in more detail below.

The process for producing the magnet structure 6 is roughly classified into two categories. One of them is such a process in that a cup yoke 2 is firstly produced to have an outer shape of the surface having a depressed part 2a formed thereon similar to a tooth cross sectional shape in the anterior toot part, and the magnet structure 6 is then produced by using the cup yoke 2 thus produced. The other of them is such a process in that a conventional magnet structure 6' having a circular cross sectional shape is firstly produced, and side parts opposite to each other of the cup yoke 2' having a circular transversal cross sectional shape are then ablated to a plane shape to produce the magnet structure 6.

In the process for producing the magnet structure 6 by using the cup yoke 2 thus formed to have an outer shape of the surface having a depressed part 2a formed thereon similar to a tooth cross sectional shape in the anterior toot part, the method for obtaining the cup yoke 2 thus formed is not particularly limited, and for example, it can be obtained by precision casting or press molding or by such a method in that a rod material having been processed on the side parts thereof to be accommodated to the shape of the side parts of the cup yoke 2 to be produced is cut into pieces, and the depressed part 2a is provided on the piece by cutting. It is sufficient that the outer shape of the surface of the cup yoke 2 thus formed having the depressed part 2a formed thereon has a minor axis diameter of 1.1 to 1.4 with respect to the diameter of the cylindrical permanent magnet being 1 and a ratio of a major axis diameter and a minor axis diameter (major axis diameter/minor axis diameter) of 1.02 to 2.0, and the minor axis sides may not necessarily form straight lines but may form externally convex curved lines continued to the externally convex curved line in the major axis as shown in Fig. 3 or may form an elliptical shape as shown in Fig. 4.

Upon producing the magnet structure 6 by using the cup yoke 2 having been formed, the cylindrical permanent magnet 3 is embedded in the circular depressed part 2a provided in the central part of the cup yoke 2, and the depressed part 2a is then sealed by welding with the circular disk plate 5 formed with a soft magnetic material through the non-magnetic ring seal 4 to cover the cylindrical permanent magnet 3 to complete the plane adsorbing surface 6a, whereby the magnet structure 6 according to the present invention can be easily produced by using the cup yoke 2 formed to be accommodated to the tooth cross sectional shape in the anterior tooth part in the manner similar to the conventional technique.

Upon producing the magnet structure 6 by using the conventional magnet structure 6' having a circular transversal cross sectional shape, on the other hand, the cylindrical permanent magnet 3 is embedded in a depressed part 2a of the cup yoke 2' formed with a soft magnetic material having a circular transversal cross sectional shape, and the depressed part 2a of the cup yoke 2' is then sealed by welding with the circular diskplate 5 formed with a soft magnetic material through the non-magnetic ring seal 4 to form a plane surface, so as to produce the magnet structure 6' having a circular transversal cross sectional shape. Thereafter, side parts opposite to each other of the cup yoke 2' having a circular transversal cross sectional shape are ablated to a plane shape to produce the magnet structure 6 having the adsorbing surface 6a having a minor axis diameter of 1.1 to 1.4 with respect to the diameter of the cylindrical permanent magnet 3 being 1 and a ratio of a major axis diameter and a minor axis diameter (major axis diameter/minor axis diameter) of 1.02 to 2.0. At this time, in the case where a disk shape cup yoke 2' is used as the cup yoke 2' having a circular transversal cross sectional shape, a conventional disk shape cup yoke 2' can be used as it is, whereby the magnet structure 6 can be produced at low cost, and the conventional production technique can be utilized.

In the case where protrusions or grooves along the transversal cross sectional surface of the cup yoke 2 or the cup yoke 2' having a circular transversal cross sectional shape are provided on at least a part of the side parts of the cup yoke 2 or the cup yoke 2' having a circular transversal cross sectional shape, or in the case where after fabricating the magnet structure 6, at least a part of the side parts of the cup yoke 2 is cut to provide a groove 2c along the transversal cross sectional surface of the cup yoke 2, it is preferred since the adhesion to a resin constituting a denture base is improved.

While the keeper 1 can be produced by punching, in the case where side parts of a keeper 1 formed with a soft magnetic material having a disk shape are ablated to a plane shape to have a ratio of a major axis diameter and a minor axis diameter (major axis diameter/minor axis diameter) of 1.02 to 2.0, the keeper 1 can be easily produced only by ablating the side parts opposite to each other of the conventional keeper 1 having a disk shape.

There is a method for simultaneously producing the keeper 1 and the magnet structure 6. In this case, what are firstly prepared are a keeper 1' having a circular adsorbing surface 1a' formed with a soft magnetic material, and a magnetic structure 6' comprising a cup yoke 2 formed with a soft magnetic material having a circular depressed part 2a at a central part thereof and an outer shape of a surface having the depressed part 2a formed thereon in the same shape as the adsorbing surface 1a' of the keeper 1', and a cylindrical permanent magnet 3 embedded in the depressed part 2a with the depressed part being sealed by welding with a circular disk plate 5 formed with a soft magnetic material through a non-magnetic ring seal 4 to form a plane adsorbing surface 6a. Thereafter, side parts of the magnet structure 6' and the keeper 1' are simultaneously ablated in a state where the adsorbing surface 6a' of the magnet structure 6' and the adsorbing surface 1a' of the keeper 1' are attached to each other through magnetism, so as to obtain a keeper 1 having an adsorbing surface 1a having a ratio of a major axis diameter and the minor axis diameter (major axis diameter/minor axis diameter) of 1.02 to 2.0, and a magnet structure 6 having an adsorbing surface 6a having the same shape as the adsorbing surface 1a of the keeper 1 and a minor axis diameter of 1.1 to 1.4 with respect to a diameter of the cylindrical permanent magnet 3 being 1. Consequently, the keeper and the magnet structure according to the present invention can be easily produced simultaneously.

## Claims

1. A dental magnetic attachment comprising a keeper having an adsorbing surface forming an externally convex curved line in a major axis and an externally convex curved line or a straight line in a minor axis continued to the externally convex curved line in the major axis and having a ratio of a major axis diameter and a minor axis diameter (major axis diameter/minor axis diameter) of 1.02 to 2.0, and a magnet structure comprising a cup yoke formed of a soft magnetic material and a cylindrical permanent magnet embedded in a circular depressed part provided in a central part of the cup yoke, with the depressed part of the cup yoke being sealed by welding with a circular disk plate formed of a soft magnetic material through a non-magnetic ring seal to form a plane adsorbing surface having the substantially same shape as the adsorbing surface of the keeper, with a minor axis diameter of the adsorbing surface of the magnet structure of 1.1 to 1.4 with respect to the diameter of the cylindrical permanent magnet being 1.

2. A dental magnetic attachment as claimed in claim 1, wherein the adsorbing surface of the keeper has a shape forming the externally convex curved line in the major axis, which is a circular arc having a constant radius with the same center as the center of the major axis, and a straight line in a minor axis continued to the circular arc in the major axis.

3. A dental magnetic attachment as claimed in claim 1, wherein the adsorbing surface of the keeper has an elliptic shape.

4. A dental magnetic attachment as claimed in claim 1 or 2, wherein the adsorbing surface of the magnet structure has a shape forming straight lines in parallel to each other in the minor axis, and plane side surfaces opposite to each other are provided on both sides of the cup yoke as being continued from the straight lines in the minor axis.

5. A dental magnetic attachment as claimed in claim 4, wherein the plane side surfaces opposite to each other are substantially in parallel to each other.

6. A dental magnetic attachment as claimed in one of claims 1 to 5, wherein a ratio of an area (Sa) occupied by the cup yoke on the adsorbing surface of the magnet structure and a transversal cross sectional area (Sm) of the cylindrical permanent magnet (Sa/Sm) is 0.8 to 1.5.

7. A dental magnetic attachment as claimed in one of claims 1 to 6, wherein a prehension bar is provided on a side part of the keeper.

8. A dental magnetic attachment as claimed in one of claims 1 to 7, wherein a column is provided on a surface of the keeper opposite to the adsorbing surface.

9. A process for producing a magnet structure comprising steps of: embedding a cylindrical permanent magnet in a circular depressed part of a cup yoke formed of a soft magnetic material having a shape having the circular depressed part at a central part thereof and an outer shape of a surface having the depressed part forming an externally convex curved line in a major axis and an externally convex curved line or a straight line in a minor axis continued to the externally convex curved line in the major axis with a minor axis diameter of 1.1 to 1.4 with respect to a diameter of the cylindrical permanent magnet being 1, and a ratio of a major axis diameter and the minor axis diameter (major axis diameter/minor axis diameter) of 1.02 to 2.0; and sealing the depressed part of the cup yoke by welding with a circular disk plate formed of a soft magnetic material through a non-magnetic ring seal to form a plane adsorbing surface.

10. A process for producing a magnet structure comprising steps of: embedding a cylindrical permanent magnet in a circular depressed part of a cup yoke formed of a soft magnetic material having a circular transversal cross sectional shape and having the circular depressed part at a central part thereof; sealing the depressed part of the cup yoke by welding with a circular disk plate formed of a soft magnetic material through a non-magnetic ring seal to form a plane surface, so as to produce a magnet structure having a circular transversal cross sectional shape; and ablating side parts of the cup yoke opposite to each other to a plane shape, so as to make a minor axis diameter of 1.1 to 1.4 with respect to a diameter of the cylindrical permanent magnet being 1, and a ratio of a major axis diameter and the minor axis diameter (major axis diameter/minor axis diameter) of 1.02 to 2.0.

11. A process for producing a keeper comprising a step of ablating opposite side parts of a circular keeper formed of a soft magnetic material to a plane shape to form an adsorbing surface having a ratio of a major axis diameter and the minor axis diameter (major axis diameter/minor axis diameter) of 1.02 to 2.0.

12. A process for producing a dental magnetic attachment comprising steps of: preparing a keeper formed of a soft magnetic material having an adsorbing surface having a circular plane shape, and a magnet structure comprising a cup yoke formed of a soft magnetic material having a circular depressed part at a central part thereof and an outer shape of a surface having the depressed part in the same shape as the adsorbing surface of the keeper, and a cylindrical permanent magnet embedded in the depressed part, with the depressed part being sealed by welding with a circular disk plate formed of a soft magnetic material through a non-magnetic ring seal to form a plane adsorbing surface; and ablating simultaneously opposite side parts of the magnet structure and those of the keeper in a state where the adsorbing surface of the magnet structure and the adsorbing surface of the keeper are attached to each other through magnetism, so as to obtain a keeper having an adsorbing surface having a ratio of a major axis diameter and the minor axis diameter (major axis diameter/minor axis diameter) of 1.02 to 2.0, and a magnet structure having an adsorbing surface having the same shape as the adsorbing surface of the keeper and a minor axis diameter of 1.1 to 1.4 with respect to a diameter of the cylindrical permanent magnet being 1.
